# EUROPÄISCHE PATENTSCHRIFT

(11) **EP 1 010 718 B1**
(45) Veröffentlichungstag und Bekanntmachung des Hinweises auf die Patenterteilung: **06.02.2008**
(21) Anmeldenummer: 99123062.4
(22) Anmeldetag: 20.11.1999
(51) Int. Cl.: C08J 3/215, C08L 21/00, C08K 9/06

(54) **Verfahren zur Herstellung von Kautschukpulvern (compounds)**
Process for making compounded rubber powders
Procédé de préparation des compositions de caoutchouc en poudre

(30) Priorität: 18.12.1998 DE 19858706
(43) Veröffentlichungstag der Anmeldung: 21.06.2000
(73) Patentinhaber: PKU Pulverkautschuk Union GmbH, 45764 Marl (DE)
(72) Erfinder: Görl, Udo, Dr., 45657 Recklinghausen (DE); Stober, Reinard, Dr., 63594 Hasselroth (DE); Lauer, Hartmut, 63628 Bad Soden Salmünster (DE); Ernst, Uwe, 45768 Marl (DE)

(56) Entgegenhaltungen:
- EP-A- 0 442 143
- EP-A- 0 824 131
- DE-A- 3 723 213
- DE-A- 19 816 972
- US-A- 3 654 218
- US-A- 4 073 755

## Beschreibung

Die Erfindung betrifft ein Verfahren zur Herstellung von Kautschukpulvern, die neben den Kautschukanteilen auch weitere für die Herstellung der vulkanisierbaren Kautschukmischung wichtige Bestandteile enthalten.

Enthält das Kautschukpulver neben den Bestandteilen des Grundbatches auch die Vernetzungschemikalien (Beschleuniger, Schwefel) spricht man von Full Compounds. Besteht das Kautschukpulver insbesondere aus den Bestandteilen des Grundbatches spricht man von Semi-Compounds. Mischformen zwischen diesen Stadien sind ebenso geeignet.

Über Ziel und Zweck des Einsatzes von Kautschukpulvern (Pulverkautschuken), sowie über Verfahren zu ihrer Herstellung ist eine Vielzahl von Publikationen erschienen.

Die Erklärung für das Interesse an pulverförmigen Kautschuken ergibt sich aus der Verarbeitungstechnik der Gummiindustrie. Dort werden die Kautschukmischungen mit einem hohen Aufwand an Zeit, Energie und Personal hergestellt. Hauptgrund dafür ist, daß der Rohstoff Kautschuk ballenförmig vorliegt.

Die Zerkleinerung des Ballens, die innige Vermischung mit Füllstoffen, Mineralölweichmachern und Vulkanisationshilfsmitteln erfolgt auf Walzen oder in Innenmischern in mehreren Verfahrensstufen. Zwischen den Stufen wird die Mischung im allgemeinen gelagert. Den Innenmischern bzw. Walzen werden Extruder-Pelletizer oder Extruder-Rollerdies nachgeschaltet.
Aus dieser sehr aufwendigen Technik der KautschukVerarbeitung kann nur eine völlig neue Verarbeitungstechnologie herausführen.
Es wird daher seit längerem der Einsatz rieselfähiger Kautschukpulver diskutiert, weil sich damit die Möglichkeit ergibt, Kautschukmischungen wie thermoplastische Kunststoffpulver einfach und schnell verarbeiten zu können.

Aus der DE-PS 2822 148 ist ein Verfahren zur Herstellung eines pulverförmigen, füllstoffhaltigen Kautschuks bekannt.

Man setzt gemäß dieser Patentschrift einer Kautschuk-Latex, Kautschuk-Lösung oder der wäßrigen Emulsion eines Kautschuks eine wäßrige Füllstoffemulsion zu und fällt das gewünschte Kautschukpulver aus.
Um die nach diesem Verfahren erhaltenen, korngrößenabhängigen Füllstoffgehalte zu vermeiden, wurden Varianten angemeldet, die als DE-PS 3723 213 und DE-PS 3723 214 zum Stand der Technik gehören.
Gemäß DE-PS 3723 213 wird in einem zweistufig ablaufenden Verfahren zuerst eine Menge ≥50 % des Füllstoffs in das Kautschukpulverpartikel integriert. Im zweiten Schritt wird der Rest des Füllstoffs auf das sogenannte Kautschukgrundkorn aufgezogen.
Dies kann als eine Variante des Puderns angesehen werden, da keine Bindung zwischen Füllstoff und Kautschuk entsteht.

Wie E.T. Italiaander (Vortrag 151. Technische Tagung der Rubber Div. der ACS, Anaheim, Kalifornien, 6. - 9. Mai 1997(GAK 6/1997 (50) 456-464)aber feststellt, ist ungeachtet der großen Zukunft, die im Delphi-Report (Delphi Report "Künftige Herstellverfahren in der Gummiindustrie" Rubber Journal, Vol. 154, Nr. 11, 20-34 (1972)) für pulverförmigen und granulierten Kautschuk vorausgesagt wurde, und zahlreicher Versuche, die von namhaften Polymerherstellern ab Mitte der siebziger Jahre bis in die frühen achtziger Jahre zur Herstellung von pulverförmigen NBR, SBR-Ruß-Masterbatches und granuliertem NR unternommen wurden, die Standard-Lieferform von Polymeren der Kautschukballen geblieben.

Ein Nachteil der bekannten Verfahren liegt zum einen darin, daß für die Einstellung des für die Qualität des Endprodukts als notwendig erachteten Korngrößendurchmessers der Füllstoffteilchen 10 µm ein Mahlvorgang notwendig ist.

Dieser bedingt aber nicht nur einen hohen Energieaufwand, sondern verursacht auch eine Schädigung der Füllstoffstruktur, die neben der aktiven Oberfläche eine wichtige Kenngröße für die Wirksamkeit in der Gummianwendung darstellt.

Zum anderen leidet die Handhabbarkeit der Produkte nach dem Stand der Technik darunter, daß die Partikel bei der Lagerung miteinander verkleben.

Aufgabe der Erfindung ist es, einen pulverförmige Füllstoffe enthaltenden Kautschuk, der leicht zu verarbeiten ist, ebenso wie ein Verfahren zu dessen Herstellung bereitzustellen.

Gegenstand der Erfindung ist ein Verfahren zur Herstellung eines feinteiligen Kautschukpulvers (Pulverkautschuk) gemäß beiliegende Ansprüche.

Der (die) Füllstoffe(e) kann (können) insgesamt oder zum Teil in vormodifizierter Form eingesetzt oder während des vorliegenden Verfahrens modifiziert worden sein.

Das Produkt wird je nach Fertigungstiefe (Art der zugegebenen Mischungsbestandteile) als Semi-, bzw. als Full Compound bezeichnet.

Das Kautschukpulver enthält insbesondere dann die Organosiliciumverbindungen in mit dem Füllstoff umgesetzter Form, wenn ein silikatischer Füllstoff, insbesondere eine gefällte Kieselsäure eingesetzt wird.

Der Korngrößenbereich der erfindungsgemäßen Kautschukpulver liegt zwischen 0,05 und 10 mm, im besonderen zwischen 0,5 und 2 mm.

Die erfindungsgemäßen Pulver weisen ein engeres und zu kleineren Teilchengrößen verschobenes Spektrum auf, als aus dem Stand der Technik hervorgeht (Kautschuk + Gummi + Kunststoffe 7, 28 (1975) 397-402).
Dieser Umstand erleichtert die Verarbeitung der Pulver. Aufgrund des Herstellverfahrens findet sich auch kein korngrößenabhängiger Füllstoffanteil in den einzelnen Partikeln.
Die pulverförmigen Kautschuke enthalten von 20 bis 250 phr, insbesondere von 50 bis 100 phr Füllstoff (phr: parts per hundred parts of rubber),des gegebenenfalls zum Teil oder insgesamt unter Verwendung der im Kautschuksektor bekannten Organo-siliciumverbindungen gemäß den Formeln (I), (II) oder (III) vor dem erfindungsgemäßen Verfahren an der Oberfläche modifiziert wurde.
Als Kautschuktypen geeignet haben sich folgende Spezies gezeigt, einzeln oder im Gemisch miteinander:
Naturkautschuk, Emulsions-SBR mit einem Styrolanteil von 10 bis 50 %, Butyl-Acrylnitril-Kautschuk.
Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Neben den genannten Kautschuken kommen folgende Elastomere, einzeln oder im Gemisch, in Frage:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenfalls auch chemisch modifizierter Naturkautschuk, wie z. B. epoxidierte Typen.
Als Füllstoffe werden im allgemeinen die aus der Kautschukverarbeitung bekannten Ruße und weißen Füllstoffe synthetischer Natur, wie z. B. gefällte Kieselsäuren oder natürliche Füllstoffe, wie z. B. Kieselkreide, Clays usw. zusätzlich verwendet.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 m²/g, einer CTAB-Zahl von 15 bis 600 m²/g, einer DBP-Adsorption von 30 bis 400 ml/100 g und einer 24 M4 DBP-Zahl von 50 bis 370 ml/100 g in einer Menge von 5 bis 250 Teilen, insbesondere 20 bis 150 Teilen, auf 100 Teile Kautschuk, insbesondere 40 bis 100 Teile.

Geeignet sind ebenso die aus dem Kautschuksektor bekannten silikatischen Füllstoffe synthetischer oder natürlicher Herkunft, insbesondere gefällte Kieselsäuren.

Diese besitzen im allgemeinen eine nach der bekannten BET-Methode bestimmte N₂-Oberfläche von 35 bis 700 m²/g, eine CTAB-Oberfläche von 30 bis 500 m²/g, eine DBP-Zahl von 150 bis 400 ml/100g.
Das erfindungsgemäße Produkt enthält diese Kieselsäuren in einer Menge von 5 bis 250 Teilen, insbesondere 20 bis 100 Teilen, bezogen auf 100 Teile Kautschuk.
Handelt es sich um weiße Naturfüllstoffe , wie Clays oder Kieselkreiden mit einer N₂-Oberfläche von 2 bis 35 m²/g setzt man diesen in einer Menge von 5 bis 350 Teilen, bezogen auf 100 Teile Kautschuk, ein.

Geeignet sind auch Pulver, die einen oder mehrere der oben genannten Füllstoffe im Gemisch enthalten.

Neben den nicht modifizierten Füllstoffen der genannten Art werden gegebenenfalls zusätzlich modifizierte Füllstoffe bei der Herstellung der hier beanspruchten Kautschukpulver eingesetzt.

Der Anteil an nicht modifizierten Füllstoffen hängt von der speziell herzustellenden Mischung ab.
In jedem Fall beläuft sich die Gesamtmenge an Füllstoff auf 20 bis 250 phr.
Diese besteht im allgemeinen zu 100 %, insbesondere zu 30 bis 100 %, bevorzugt 60 bis 100 %, aus den nicht modifizierten Füllstoffen: Kieselsäure und/oder Ruß.
Für die Modifizierung der Oberflächen setzt man im allgemeinen Organosiliciumverbindungen der allgemeinen Formeln

[R¹ₙ₋(RO)₃₋ₙ Si-(Alk)ₘ-(Ar)ₚ]_{q}[B] (I),

oder

R¹ₙ (RO)₃₋ₙ Si-(Alkenyl) (II)

ein,
in denen bedeuten
- B:: -SCN, -SH, -Cl, -NH₂ (wenn q = 1) oder -Sₓ- (wenn q = 2)
- R und R¹:: eine Alkylgruppe mit 1 bis 4 Kohlenstoffatomen,
verzweigt oder nicht verzweigt, den Phenylrest,
wobei alle Rest R und R¹ jeweils die gleiche oder eine verschiedene Bedeutung haben können,
bevorzugt eine Alkylgruppe,
- R:: eine C₁-C₄-Alkyl, -C₁-C₄-Alkoxygruppe,
verzweigt oder nicht verzweigt,
- n:: 0; 1 oder 2,
- Alk:: einen zweiwertigen geraden oder verzweigten Kohlenwasserstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, daß p und m nicht gleichzeitig 0 bedeuten,
- x:: eine Zahl von 2 bis 8,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Modifizierte Füllstoffe, die erfindungsgemäß eingesetzt werden, werden z. B. in der EP-B 0442 143, der EP-B 0177 674 und insbesondere in Form von Granulaten in der EP-A 0795 579 (weiße Füllstoffe) bzw. in der EP-B 0519 188 (Ruß) beschrieben.

Als geeignet haben sich für die Vormodifizierung oder den Zusatz zur Füllstoffsuspension insbesondere die Bis(alkoxysilylalkyl)-oligosulfane der Typen Bis(trialkoxysilylpropyl)-tetrasulfan und -disulfan erwiesen.

Die Kautschukpulver enthalten neben den bereits genannten Füllstoffen insbesondere bekannte Verarbeitungs- oder Vulkanisationshilfsmittel ausgewählt aus der Gruppe Zinkoxid, Zinkstearat, Stearinsäure, Polyalkohole, Polyamine, Harze, Wachse, Weichmacheröle, Alterungsschutzmittel gegen Wärme, Licht oder Sauerstoff und Ozon, Flammschutzmittel wie z. B. Al(OH)₃ und Mg(OH)₂, verschiedene Vernetzungschemikalien und Beschleuniger und gegebenfalls Schwefel in den gummitechnisch üblichen Konzentrationen, bevorzugt Schwefel in mit oberflächenaktiven Substanzen versetzten Modifikationen, wie er kommerziell verfügbar ist.

Die Bestimmung der Korngröße erfolgt aus der Füllstoffsuspension.

In einer besonders bevorzugten Form des erfindungsgemäßen Verfahrens liegen sämtliche der eingesetzten Feststoffe vor dem Ausfällen der Kautschukpartikel aus der Suspension in einer Korngröße <50 µm, bevorzugt <10 µm vor. Gegebenenfalls kann es aufgrund der Herstellung zu Agglomeratbildung kommen, die jedoch das Verarbeitungsverhalten nicht negativ beeinflussen.

Das anspruchsgemäße Verfahren erfolgt durch durch Ausfällen aus wasserhaltigen Mischungen, die gegebenfalls mit Organosiliciumverbindungen modifizierten, feinteilige(n) Füllstoff(e) (Ruß und/oder silikatischer Füllstoff), wasserlösliche Salze eines Metalls der Gruppen IIa, IIb, IIIa und VIII des periodischen Systems der Elemente und einen Kautschuklatex oder die wäßrige Emulsion einer Kautschuklösung, gegebenfalls in Gegenwart eines organischen Lösungsmittels enthalten, das dadurch gekennzeichnet ist, daß man
a) ≥50 Gew.-%, aber weniger als 100 Gew.-% der vorgesehenen Menge des feinteiligen Füllstoffs, in Form einer wäßrigen Suspension mit einem Gehalt von 2 bis 15 Gew.-% in Wasser,gegebenfalls mit einer der für die Modifizierung der Füllstoffoberfläche vorgesehenen Menge einer oder mehrerer der Organosiliciumverbindungen gemäß den Formeln (I) oder II) in einer Menge von 0,1 bis 20 Gew.-%, bezogen auf den Füllstoff,insbesondere, wenn es sich um einen silikatischen Füllstoff, bevorzugt gefällte Kieselsäure handelt,und/oder ≥50 Gew.-% aber weniger als 100 Gew.-% einer zumindest zum Teil mit einer oder mehreren der Organosiliciumverbindungen (Formeln (I) oder II) an der Oberfläche modifizierten Füllstoffs in Gegenwart eines Emulgators mit einem Kautschuklatex oder einer wäßrigen Emulsion einer Kautschuklösung vermischt und den pH-Wert der Mischung auf einen Wert im Bereich von 7,5 bis 6,5, durch Zusatz einer Lewis-Säure, absenkt (erste Stufe).
b) den restlichen Anteil (Splitting Anteil) der oben genannten feinteiligen Füllstoffe, gegebenenfalls zusammen mit der zur Modifizierung der Füllstoffoberfläche vorgesehenen Restmenge an Organosiliciumverbindungen der Formeln (I) oder II) in Form einer Suspension zusetzt, den pH-Wert, insbesondere durch Zusatz einer Lewis-Säure auf einen Wert im Bereich <6,5 bis -5, bevorzugt ∼5,5 absenkt, so daß der in der Mischung befindliche Kautschuk zusammen mit dem Füllstoff vollständig ausfällt (zweite Stufe),
c) den ausgefällten Feststoff mit an sich bekannten Maßnahmen abtrennt,
d) ihn gegebenenfalls wäscht und
e) trocknet.

Die Organosiliciumverbindungen werden insbesondere bei Verwendung von silikatischen Füllstoffen, bevorzugt Kieselsäuren, eingesetzt.

Das Fällverfahren wird im allgemeinen bei Raumtemperatur, insbesondere bei 20 bis 80 ° C durchgeführt.

Die Mengen an Füllstoff und Kautschuk werden entsprechend dem gewünschen Füllgrad des resultierenden Kautschuks je nach Anwendung abgestimmt.

Bei einem Gesamtanteil von ≥ 80 Teilen Füllstoff phr setzt man in der zweiten Stufe 1 bis 10 Gew.-% des Füllstoffs als restlichen Anteil zu.

Ein Verkleben der hergestellten Partikel erfolgt auch unter Druck, wenn z. B. mehrere Säcke aufeinanderliegen, nicht.

Diese "Inertisierung" der Oberfläche ist nicht zu verwechseln mit dem bekannten Pudern von klebrigen Pulvern mit Füllstoffen. Diese nur oberflächlich haftenden Füllstoffe werden bei der mechanischen Beanspruchung, z. B. in Förderanlagen oder beim Silieren schnell abgelöst. Das Verkleben und Verklumpen der feinteiligen Pulver, das es zu verhindern gilt, tritt dann trotz des Puderns ein. Im Unterschied zu den nach dem Stand der Technik bekannten, oberflächlich mit Füllstoffen als Fließhilfsmittel belegten klebrigen Partikeln handelt es sich erfindungsgemäß um eine Inkorporation von Füllstoffteilchen in die Oberfläche während des Fällprozesses zur Herstellung des pulverförmigen Kautschuks. In Abhängigkeit vom Füllungsgrad mit einem oder mehreren der oben genannten Füllstoffe wird die sinnvolle Verteilung zwischen Partikelinnerem und einen mit diesem verbundenen äußeren Bereich eingestellt.

Bei einem Produkt mit hohem Füllungsgrad (≥80 Teile Füllstoff pro hundert Teilen Kautschuk) sind im äußeren Kornbereich bevorzugt nur 1 bis 10 Teile dieser Füllstoffmenge eingebunden.
Enthält der pulverförmige Kautschuk jedoch insgesamt <80 Teile Füllstoff pro hundert Teilen Kautschuk, sind davon bevorzugt >10 bis 20 Teile im äußeren Kornbereich (Randbereich) gebunden, d. h. nicht durch die weniger wirksamen Adhäsionskräfte nur anhaftend.

Zwischen diesen Anteilen bewegen sich im allgemeinen die Verteilungen des Füllstoffs im Innern der Partikel und in dem sogenannten Randbereich.

Je höher der Gesamtgehalt an Füllstoff ist, desto weniger muß die Klebrigkeit des Pulvers durch ein erhöhte Konzentration der Füllstoff im Randbereich unterbunden werden.

Diese Anteile des Füllstoffs sind erfindungsgemäß nicht äußerlich auf die einzelnen Kautschukpartikel aufgezogen (s. DE-PS 37 23213), sondern in die Kautschukoberfläche integriert.

Diese Füllstoffverteilung und die Art der Bindung der Füllstoffe in der Kautschukmasse bewirken die hohe Fließfähigkeit der erfindungsgemäßen Pulver und verhindern das Verkleben während der Lagerung der Pulver, ohne daß diese Eigenschaften durch mechanische Belastungen beim Fördern, Silieren etc. verlorengehen.

Als Füllstoffe setzt man die obengenannten Ruße in feinteiliger Form (fluffy) ein, die im allgemeinen einen mittleren Korngrößendurchmesser von 1 bis 9 µm, vorzugsweise 1 bis 8 µm aufweisen, bevor sie suspendiert sind.

Dies erleichtert die Dispersion, so daß man ohne hohen Energieaufwand zu wäßrigen Suspensionen mit Füllstoffpartikeln eines mittleren Teilchendurchmessers deutlich kleiner als 10 µm gelangt.
Gefällte Kieselsäure kann vorteilhaft in Form eines salzfrei gewaschenen Filterkuchens eingesetzt werden.

Als Metallsalze kommen solche in Frage, die von Elementen der Gruppen IIa, IIb, IIIa und VIII des periodischen Systems der Elemente stammen. Diese Gruppeneinteilung entspricht der alten IUPAC-Empfehlung (siehe Periodisches System der Elemente, Verlag Chemie, Weinheim, 1985) Typische Vertreter sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums bevorzugt sind. Besonders bevorzugt ist Aluminiumsulfat.
Die Salze werden in einer Menge von 0,1 bis 6,5 Gewichtsteilen, bevorzugt inform einer wäßrigen Lösung pro 100 Gewichtsteile Kautschuk eingesetzt. Zur Einstellung des definierten pH-Werte geeignete Säuren sind in erster Linie Mineralsäuren, wie z. B. Schwefelsäure, Phosphorsäure und Salzsäure, wobei die Schwefelsäure besonders bevorzugt ist. Eingesetzt werden können aber auch Carbonsäuren, wie z. B. Ameisen- und Essigsäure.

Die Menge an Säure richtet sich nach der Art und Menge des wasserlöslichen Metallsalzes, des Füllstoffs, des Kautschuks und des gegebenfalls vorhandenen Alkalisilikats. Sie läßt sich durch einige orientierende Versuche leicht ermitteln.

Nach einer bevorzugten Ausführungsform des erfindungsgemäßen Verfahrens werden zusätzlich noch bis zu 5 Gewichtsteile pro 100 Gewichtsteile Kautschuk Kieselsäure (SiO₂) in Form einer Alkalisilikatlösung, vorzugsweise als Wasserglas mit einem Na₂O: SiO₂-Molverhältnis von 2 : 1 bis 1 : 4, eingesetzt. Die Alkalisilikatlösung kann dabei sowohl der Kautschukkomponente als auch der Füllstoff-Suspension zugesetzt werden. Bevorzugt ist die Zugabe zur Kautschukkomponente, besonders bei der kontinuierlichen Fahrweise.

Im allgemeinen wir das erfindungsgemäße Verfahren wie folgt durchgeführt:
Zunächst wird eine Füllstoff-Suspension in der Weise hergestellt, daß man einen Teil, ≥50 %, des im Endprodukt enthaltenen, gegebenenfalls zum Teil mit Verbindungen gemäß den Formeln (I) oder (II) an der Oberfläche modifizierten Füllstoffs zusammen mit dem Metallsalz und gegebenenfalls der Alkalisilikatlösung in Wasser dispergiert. Die nicht wasserlöslichen Bestandteile des Füllstoffs liegen bei 2 bis 15 Gew%, im allgemeinen bei etwa 6 Gewichtsprozent. Der letztgenannte Wert stellt keine bindende Beschränkung dar und kann sowohl unter- als auch überschritten werden. Der maximale Gehalt wird durch die Pumpbarkeit der Suspension beschränkt.

Die so hergestellte Füllstoffsuspension wird anschließend mit dem gegebenfalls Alkalisilikatlösung enthaltenden Kautschuk-Latex oder der gegebenfalls Alkalisilikatlösung enthaltenden wäßrigen Emulsion einer Kautschuk-Lösung innig vermischt. Dazu eignen sich bekannte Rühraggregate, wie z. B. Propeller-Rührer.

Nach dem Vermischen wird unter Aufrechterhaltung des Rührvorganges mit Hilfe einer Säure in der ersten Stufe ein pH-Wert im Bereich von 7,5 bis 6,5 eingestellt. Dabei fällt ein Kautschukgrundkorn mit einem homogenen Füllstoffgehalt an. Die Größe dieses Grundkorns wird durch die gewählte Metallsalzmenge im Bereich von 0,1 bis 6,5 phr gesteuert. Die Steuerung vollzieht sich so, daß mit der niedrigsten Menge an Metallsalz die größte Körnung erhalten wird.

Der Feststoffgehalt der eingesetzten Latices beläuft sich im allgemeinen auf 20 bis 25 Gew.-%. Der Feststoffgehalt der Kautschuklösungen beträgt im allgemeinen 3 bis 35 Gew.-%, der der Kautschukemulsionen im allgemeinen 5 bis 30 Gew. -%.

Das erfindungsgemäße Verfahren kann sowohl diskontinuierlich als auch kontinuierlich durchgeführt werden.

Das ausgefällte Kautschukpulver wird vorteilhaft mit Hilfe einer Zentrifuge abgetrennt und dann auf einen Restwassergehalt von im allgemeinen ≤1 % getrocknet, insbesondere in einem Wirbelbettrockner.

Während des erfindungsgemäßen Herstellverfahrens werden der Suspension im allgemeinen neben den bevorzugt eingesetzten bekannten Emulgatoren, wie z. B. Fettalkoholpolyethylenglykolethern in einer bevorzugten Ausführungsform weitere Verarbeitungs- und gegebenfalls Vulkanisationshilfsmittel in einer Menge oder auch geringer zugesetzt, wie sie vulkanisierbare Kautschukmischungen in der Regel enthalten.

Dabei handelt es sich um bekannte
a) Aktivatoren, wie z. B. Stearinsäure, um
b) Alterungsschutzmittel
c) Verarbeitungshilfsmittel, wie Harze und/oder Wachse,
die im allgemeinen jeweils in Mengen von 0,5 bis 10 Gew.-%, bezogen auf den Kautschukanteil, der Füllstoffsuspension direkt oder mit der Latexemulsion(-lösung) zugesetzt werden.
Weitere wichtige Zusätze stellen die Vulkanisationsbeschleuniger dar.
Diese werden insbesondere ausgewählt aus den Klassen der Sulfenamide, Mercapto- und Sulfidbeschleuniger, sowie der Thiurame, Thiocarbamate und Amine und im allgemeinen in einer Menge von 0,1 bis 8 Gew.-%, bezogen auf den Kautschukanteil, der Füllstoffsuspension direkt oder mit der Latexemulsion(-lösung) in feinverteilter Form oder in einem mit dem Kautschuk verträglichen, bekannten Öl zugesetzt.
In einer bevorzugten Ausführungsform vermischt man das die oben genannten Bestandteile enthaltene Kautschukpulver mit den Beschleunigersubstanzen oder man sprüht diese z. B. in einem Öl gelöst auf das Kautschukpulver auf.

Gegebenenfalls mischt man den zur Vulkanisation notwendigen Schwefel, insbesondere in einer feinteiligen (5 bis 45 µm) und mit oberflächenaktiven Substanzen versetzten Modifikation in einer Menge von 0,2 bis 8 Gew.-%, bezogen auf den Kautschukanteil, der Suspension oder dem Kautschukpulver zu.

Gegebenenfalls setzt man auch nichtionogene, kationische oder anionische Tenside als oberflächenaktive Substanzen zu. Insbesondere dann, wenn man in die Füllstoffsuspension Organosiliciumverbindungen eindosiert.

Eine besondere Eignung findet sich bei der Verwendung von feinteiligen festen Verbindungen. Der Korngrößenbereich der oben genannten Stoffe liegt im allgemeinen unter 50 µm, insbesondere 10 µm.

Dies ermöglicht die bestmögliche Verteilung in den erfindungsgemäßen Kautschukpulvern, die mit Hilfe des hier beschriebenen Verfahren erhalten werden. Von besonderer Bedeutung für die spätere Verwendung ist auch das Einmischen der allgemein bekannten Zinksalze, insbesondere des Zinkoxids, in einer Menge von 0,5 bis 8 Gew.-%, bezogen auf den Kautschukanteil.

Bevorzugt setzt man ein Zinkoxid mit einer spez. Oberfläche zwischen 20 und 50 m²/g ein. Diese Eigenschaft ist verbunden mit den oben angegebenen Korngrößenbereich <50 µm, insbesondere <10 µm.
Sollten jedoch nur oder zum Teil Zusätze mit einem darüber liegenden Korngrößenbereich zur Verfügung stehen, ist es nach dem Stand der Technik möglich, die vor Zusatz des Kautschukanteils vorliegenden, wäßrigen Suspensionen durch bekannte geeignete Mahlaggregate zu schleusen.
Man erhält anschließend Suspensionen mit Feststoffen der gewünschten Korngrößenverteilung.

In einer besonderen Ausführungsform enthält die Suspension, aus der das erfindungsgemäße Kautschukpulver ausgefällt wird, zusätzlich ein als Verarbeitungshilfe in der Kautschukindustrie bekanntes Weichmacheröl.
Dieses dient u. a. dazu, das Verarbeitungsverhältnis der plsstizierten Rohmischung (Spritzverhalten,
Extrudierverhalten) zu verbessern und wird entweder mit dem Kautschuklatex (-Emulsion, Lösung) oder der Suspension getrennt zugesetzt.

Die erfindungsgemäßen feinteiligen Kautschukpulver werden zur Herstellung vulkanisierbarer Kautschukmischungen verwendet. Dabei sind die zur Mischungsherstellung notwendigen Bestandteile bevorzugt sämtlich im Kautschukpulver enthalten.

Sie können jedoch auch mit anderen üblichen Kautschuken, Vulkanisationshilfsmitteln und Füllstoffen zusätzlich vermischt werden, wenn dies für die Eigenschaften des gewünschten Vulkanisats erforderlich ist.

Es gelingt erfindungsgemäß, feinteilige,gegebenenfalls modifizierte Füllstoffe und weitere für die Vulkanisation notwendige Bestandteile enthaltende Kautschukpulver direkt herzustellen, die rieselfähig sind und auch nach mechanischer Beanspruchung (z. B. Fördern, Verpacken) rieselfähig bleiben. Aufgrund der Feinteiligkeit sind keine weiteren Mahl- oder sonstige Zerkleinerungsmaßnahmen notwendig, um feinteilige Produkte zu erhalten.

Die erhaltenen feinteiligen Kautschukpulver (Semi- und Full Compounds), lassen sich leicht verarbeiten und führen zu Vulkanisaten mit verbesserten Eigenschaften.

Herstellungsbeispiele

### Beispiel I

### Herstellung eines Halbcompounds in Pulverform auf Basis E-SBR, N234 und Zuschlägen

Unter Rühren wird eine stabile Dispersion aus 5,6 kg N234, 1 kg ZnO aktiv, 2,2 kg Öl, 96 g Marlipal 1618/25, je 0,2 kg Stearinsäure, 6 PPD und TMQ, 0,6 kg Rhenosin C 90 in 134,4 L Wasser hergestellt. Die Dispersion wird mit 95,69 kg einer 20,9%igen E-SBR Latexemulsion unter intensivem Rühren vermischt. Die Gesamtmischung wird durch Zugabe einer ca. 10%igen Al₂(SO₄)₃ Lsg auf einen pH-Wert von 6,5 abgesenkt und dadurch die Fällung ausgelöst. Bei diesem pH - Wert setzt man nochmals eine stabile Dispersion aus 4 kg N 234 und 96,0 L VE-Wasser zu, und senkt den pH-Wert anschließend unter weiterer Al₂(SO₄)₃ Zugabe auf 6,0 ab. Nach dem Fällprozeß erfolgt eine mechanische Abtrennung des größten Teils des Wassers, gefolgt von einem Trocknungsschritt auf eine Restfeuchte von < 1%. Das pulverförmige Fertigprodukt enthält 100 Teile E-SBR und 48 Teile N234 und sämtliche Zuschlagstoffe. ( H-EPB I )

### Beispiel II

### Herstellung eines Fullcompounds in Pulverform auf Basis E-SBR, N234 und Zuschlägen

Unter Rühren wird zunächst eine stabile Dispersion aus 5,6 kg N234, 1 kg ZnO aktiv, 96g Marlipal 1618/25, 0,32 kg Schwefel und 0,04 kg MBTS mit 126,6L VE-Wasser hergestellt. Ebenso wird eine Öl-Lösung aus 2,2 kg Öl, je 0,2 kg Stearinsäure, 6 PPD und TMQ, 0,6 kg Rhenosin C90, 0,32 kg TBBS hergestellt und auf 75°C erhitzt. Die Öl-Lösung wird mit 95,69 kg einer 20,9%igen E-SBR Latex Emulsion unter intensivem Rühren vermischt. Im Anschluß gibt man die oben genannte stabile Dispersion zum Latex-Öl-Gemisch. Der pH-Wert des Gemisches wird anschließend durch Zugabe einer ca. 10%igen Al₂(SO₄)₃ Lsg. auf einen Wert von 6,5 abgesenkt ( Beginn der Fällung ). Bei diesem pH-Wert wird die Fällung unterbrochen und man setzt nochmals eine stabile Dispersion aus 4 kg N 234 und 96,0 L VE-Wasser dem Reaktionsgemisch zu. Diesem Verfahrenschritt folgt eine weitere Absenkung des pH-Wertes auf 5,5 mittels Zugabe weiterer Al₂(SO₄)₃ - Mengen. Nach dem Fällprozeß erfolgt eine mechanische Abtrennung des größten Teils des Wassers, gefolgt von einem Trocknungsschritt auf eine Restfeuchte von < 1%. Das pulverförmige Fertigprodukt enthält 100 Teile E-SBR und 48 Teile N234 und sämtliche Zuschlagstoffe. ( F-EPB II )

### Beispiel III

### Herstellung eines Halbcompounds in Pulverform auf Basis E-SBR, Kieselsäure und Zuschlägen

Unter Rühren wird eine stabile Dispersion aus 12 kg Ultrasil 7000, 0,98 kg Si 69, 0,6 kg ZnO aktiv, 120 g Marlipal 1618/25 mit 108 L VE-Wasser hergestellt. Ebenso wird eine Öl-Lösung aus 5 kg Öl, 0,2 kg Stearinsäure, 0,3 kg 6 PPD, 0,2 kg Protector G 35 hergestellt und auf 75°C erhitzt. Die Öl-Lösung wird mit 95,69 kg einer 20,9%igen E-SBR Latex Emulsion unter intensivem Rühren vermischt. Im Anschluß gibt man die oben genannte stabile Dispersion zum Latex-Öl-Gemisch. Durch Zugabe einer ca. 10%igen Al₂(SO₄)₃ Lsg. Wird der pH-Wert auf einen Wert von 7 abgesenkt. Nach Absenkung des pH-Wertes auf 7 setzt man nochmals eine stabile Dispersion aus 3 kg Ultrasil 7000, 240g Si 69, 40g Marlipal und 27 L VE-Wasser zu. Nach dem man die Dispersion zugesetzt hat, senkt man den pH-Wert weiter auf 5,5 mittels Al₂(SO₄)₃ ab. Nach dem Fällprozeß erfolgt eine mechanische Abtrennung des größten Teils des Wassers, gefolgt von einem Trocknungsschritt auf eine Restfeuchte von < 1%. Das pulverförmige Fertigprodukt enthält 100 Teile E-SBR und 75 Teile Ultrasil 7000 und sämtliche Zuschlagstoffe. (H -EPB III)

### Beispiel IV

### Herstellung eines Fullcompounds in Pulverform auf Basis E-SBR, Kieselsäure und Zuschlägen

Unter Rühren wird eine stabile Dispersion aus 12 kg Ultrasil 7000, 0,98 kg Si 69, 0,6 kg ZnO aktiv, 120 g Marlipal 1618/25, 0,3 kg Schwefel mit 108 L VE-Wasser hergestellt. Ebenso wird eine Öl-Lösung aus 5 kg Öl, 0,2 kg Stearinsäure, 0,3 kg 6 PPD, 0,2 kg Protector G 35, 0,3 kg CBS und 0,4 kg DPG hergestellt und auf 75°C erhitzt. Die Öl-Lösung wird mit 95,69 kg einer 20,9%igen E-SBR Latex Emulsion unter intensivem Rühren vermischt. Im Anschluß gibt man die oben genannte stabile Dispersion zum Latex-Öl-Gemisch. Durch Zugabe einer ca. 10%igen Al₂(SO₄)₃ Lsg. wird der pH-Wert auf einen Wert von 7 abgesenkt. Nach Absenkung des pH-Wertes auf 7 setzt man nochmals eine stabile Dispersion aus 3 kg Ultrasil 7000, 240g Si 69, 40g Marlipal und 27 L VE-Wasser zu. Nach dem man die Dispersion zugesetzt hat, senkt man den pH-Wert weiter auf 5,5 mittels Al₂(SO₄)₃ ab. Nach dem Fällprozeß erfolgt eine mechanische Abtrennung des größten Teils des Wassers, gefolgt von einem Trocknungsschritt auf eine Restfeuchte von < 1%. Das pulverförmige Fertigprodukt enthält 100 Teile E-SBR und 75 Teile Ultrasil 7000 und sämtliche Zuschlagstoffe. (F- EBP IV )

### Beispiel V

### Herstellung eines Fullcompounds in Pulverform auf Basis NR/E-SBR, N234 und Zuschlägen

Unter Rühren wird zunächst eine stabile Dispersion aus 6,0 kg N234, 0,6 kg ZnO aktiv, 100 g Marlipal 1618/25, 0,4 kg Schwefel, und 0,06 kg MBTS mit 126,6L VE-Wasser hergestellt. Ebenso wird eine Öl-Lösung aus 2,4 kg Öl, , je 0,4 kg Stearinsäure und 6 PPD 0,2 kg TMQ, 0,2 kg Protector G 35, 0,24 kg TBBS hergestellt und auf 75°C erhitzt. Die Öl-Lösung wird mit je 47,85 kg einer 20,9%igen NR und einer 20,9%igen E-SBR Latex Emulsion unter intensivem Rühren vermischt. Im Anschluß gibt man die oben genannte stabile Dispersion zum Latex-Öl-Gemisch. Der pH-Wert des Gemisches wird anschließend durch Zugabe einer ca. 10%igen Al₂(SO₄)₃ Lsg. auf einen Wert von 7,0 abgesenkt ( Beginn der Fällung ). Bei diesem pH-Wert wird die Fällung unterbrochen und man setzt nochmals eine stabile Dispersion aus 4 kg N 234 und 96,0 L VE-Wasser dem Reaktionsgemisch zu. Diesem Verfahrenschritt folgt eine weitere Absenkung des pH-Wertes auf 6,0 mittels Zugabe weiterer Al₂(SO₄)₃ - Mengen. Nach dem Fällprozeß erfolgt eine mechanische Abtrennung des größten Teils des Wassers, gefolgt von einem Trocknungsschritt auf eine Restfeuchte von < 1%. Das pulverförmige Fertigprodukt enthält 100 Teile E-SBR und 50 Teile N234 und sämtliche Zuschlagstoffe. ( F-EPB V )

Die erfindungsgemäßen Produkte in der Gummianwendung
- Europrene 1552: Styrol-Butadien Kautschuk mit 19% Styrolgehalt (Enichem)
- Europrene N 5564: Ballen-Masterbatch bestehend aus Europrene 1552 / N234 / Öl im Verhältnis 100:52:10 (Enichem)
- RSS 1: Naturkautschuk (Ribbed Smoked Sheet) H-EPB I Erfindungsgemäßer Halb-Compound (Pulverkautschuk) bestehend aus 100 Teilen SBR 1552, 48 T. N234, 11 T. Öl, 5 T. ZnO, 1 T. Stearinsäure, 1 T. 6PPD, 1 T. TMQ, 3 T. Harz
- F-EPB II: Erfindungsgemäßer Full-Compound zusammengesetzt wie H-EPB I und zusätzlich 1,6 T. TBBS, 0,2 T. MBTS, 1,6 T. Schwefel
- H-EPB III: Erfindungsgemäßer Halb-Compound (Pulverkautschuk) bestehend aus 100 Teilen E-SBR, 75 T. Ultrasil 7000, 6,1 T. Si69, 3 T. ZnO,25 T. Öl, 1 T. Stearinsäure, 1,5 T. 6PPD, 1 T. Wachs
- F-EPB IV: Erfindungsgemäßer Full-Compound zusammengesetzt wie H-EPB III und zusätzlich 1,5 T. CBS, 2 T. DPG, 1,5 T. Schwefel
- F-EPB V: Erfindungsgemäßer Full-Compound Pulverkautschuk bestehend aus 50 Teilen NR, 50 Teile SBR, 50 T. N234, 12 T. Öl, 3 T. Zinkoxid, 2T. Stearinsäure,2T. 6PPD, 1T. TMQ, 1T. Wachs, 1,2 T. TBBS, 0,3 T. MBTS, 2 T. Schwefel
- 6PPD: N-(1,3-Dimethylbutyl)-N-phenyl-p-phenylendiamin
- Ultrasil 7000 Gr: Dispersionsverbesserte Reifenkieselsäure (N₂-Oberfläche ca. 180m²/g) (Degussa AG)
- TMQ: 2,2,4-Trimethyl-1,2-dihydro-chinolin
- Si69: Bis(triethoxysilylpropyl)tetrasulfan
- TBBS: N-tert. Butyl-2-benzthiazylsulfenamid
- MBTS: Dibenzothiazyldisulfid
- Enerthene 1849-1: aromatischer Weichmacher (BP)
- DPG: Diphenylguanidin
- CBS: Benzothiazyl-2-cyclohexylsulfenamid
- E - SBR 1500: Emulsions - Styrolbutadienlatex mit 23,5 % Styrolgehalt
- ZnO aktiv: Zinkoxid mit einer Oberfläche von 45 m²/g
- Marlipal 1618/25: Emulgator : Fettalkoholpolyethylen glykolether (Hüls AG)
- Rhenosin C 90: Verstärkerharz
- Protector G 35: Ozonschutzwachs
- N 234: Ruß, N₂-Oberfläche 125 m²/g

### Gummitechnische Prüfmethoden

- Zugversuch an Stab: DIN 53 504
- Shore Härte: DIN 53 505
- Modul 100%: DIN 53 504
- Modul 300%: DIN 53 504
- Bruchdehnung: DIN 53 504
- Bruchenergie: DIN 53 504
- Ball Rebound: ASTM D5308
- Dₘₐₓ-Dₘᵢₙ: DIN 53 529

### Beispiel A Vergleich des gummitechnischen Wertebildes eines Halb-Compounds ( H-EPB I ) gegen eine konventionell hergestellte Standardmischung

### a) Rezeptur

| Mischung | 1 [phr] | 2 [phr] |
|---|---|---|
| Europrene 1552 | 100 | - |
| H-EPB I | - | 171* |
| N234 | 52 | - |
| ZnO RS | 5 | - |
| Stearinsäure | 1 | - |
| Enerthene 1849-1 | 10 | - |
| 6 PPD | 1 | - |
| TMQ | 1 | - |
| Rhenosin C 90 | 3 | - |
| TBBS | 1,6 | 1,6 |
| MBTS | 0,2 | 0,2 |
| Schwefel | 1,6 | 1,6 |

| | | |
|---|---|---|
| * Die Bestandteile des Grundbatches befinden sich im Pulverkautschuk | | |

### b) Mischverfahren

### 1. Stufe

| | | | |
|---|---|---|---|
| Innenmischer : | GK 1,5 E; Volumen 1,5 L; Friktion 1:1; Stempel 5,5 bar | | |
| Mischung | | 1 | 2 |
| Füllgrad | | 0,55 | |
| RPM | | 50 | |
| Durchflußtemperatur [°C] | | 60 | |
| 0 - 0,5' | SBR 1552 | Stufe entfällt | |
| 0,5 - 1,5' | Ruß, Öl, ZnO, Stearinsäure,6 PPD, TMQ, Harz | | |
| 1,5' | Säubern | | |
| 1,5 - 3' | Mischen und ausstoßen | | |
| Ausstoßtemperatur ∼ 140°C | | | |

### 2. Stufe

| | | | |
|---|---|---|---|
| Innenmischer : | GK 1,5 E; Volumen 1,5 L; Friktion 1:1; Stempel 5,5 bar; RPM 30; Füllgrad 0,55; Durchflußtemperatur 60°C | | |
| 0 - 1,5' | Batch Stufe 1, Beschleuniger, Schwefel | 0 - 0,5' | H-EPB I als Pulver, |
| 1,5' | Ausstoßen | Beschleuniger, Schwefel | |
| | | 0,5 - 1,5' | Mischen und Ausstoßen |

### c) Vulkanisatdaten

Vulkanisationstemperatur: 165 ° C
Vulkanisationszeit : 15 min

| Mischungsnummer | 1 | 2 |
|---|---|---|
| Zugfestigkeit [MPa] | 21,3 | 21,5 |
| Modul 100% [MPa] | 1,8 | 1,9 |
| Modul 300% [MPa] | 9,4 | 10,0 |
| Bruchdehnung [%] | 500 | 490 |
| Bruchenergie [J] | 134 | 138 |
| Shore-A-Härte | 66 | 66 |

Die Ergebnisse zeigen, daß es möglich ist, ohne Verlust an späterer gummitechnischer Leistung, neben Polymer und Füllstoff weitere Mischungsbestandteile während der Herstellung des Pulverkautschukes beizufügen. Es gelingt hierdurch u.a. die energieaufwendige 1 Mischstufe einzusparen.

### Beispiel B Vergleich des gummitechnischen Wertebildes eines Full-Compounds ( F-EPB II ) gegen eine konventionell hergestellte Standardmischung (Ballen-Masterbatch, rußgefüllt)

### a) Rezeptur

| Mischung | 1 [phr] | 2 [phr] |
|---|---|---|
| Europrene N5564 | 162 | - |
| F-EPB II | - | 174* |
| ZnO RS | 5 | - |
| Stearinsäure | 1 | - |
| 6 PPD | 1 | - |
| TMQ | 1 | - |
| Rhenosin C90 | 3 | - |
| TBBS | 1,6 | - |
| MBTS | 0,2 | - |
| Schwefel | 1,6 | - |

| | | |
|---|---|---|
| *Alle Mischungsbestandteile befinden sich im Pulverkautschuk | | |

### b)Mischverfahren

### 1. Stufe

| | | | | |
|---|---|---|---|---|
| Innenmischer : | GK 1,5 E; Volumen 1,5 L; Friktion 1:1; Stempel 5,5 bar | | | |
| Mischung | | | 1 | 2 |
| Füllgrad | | | 0,55 | |
| RPM | | | 50 | |
| Durchflußtemperatur [°C] | | | 60 | |
| 0 - 0,5' | Europrene N5564 | | Stufe entfällt | |
| 0,5 - 1,5' | ZnO, Stearinsäure, 6 PPD,TMQ, Harz | | | |
| 1,5' | Säubern | | | |
| 1,5 - 3' | Mischen und ausstoßen | | | |
| Ausstoßtemperatur ∼ 140°C | | | | |

### 2. Stufe

| | | | |
|---|---|---|---|
| Innenmischer : | GK 1,5 E; Volumen 1,5 L; Friktion 1:1; Stempel 5,5 bar; RPM 30; Füllgrad 0,55; Durchflußtemperatur 60°C | | |
| 0 - 1,5' | Batch Stufe 1, Beschleuniger, Schwefel | 0 - 0,5' | F-EPB II als Pulver, Beschleuniger, Schwefel |
| 1,5' | Ausstoßen | 0,5 - 1,5' | Mischen und Ausstoßen |

### c) Vulkanisatdaten

Vulkanisationstemperatur : 165°C
Vulkanisationszeit : 15 min

| Mischungsnummer | 1 | 2 |
|---|---|---|
| Zugfestigkeit [MPa] | 21,6 | 20,8 |
| Modul 100% [MPa] | 1,8 | 1,8 |
| Modul 300% [MPa] | 8,7 | 8,8 |
| Bruchdehnung [%] | 530 | 510 |
| Bruchenergie [J] | 159,8 | 152,8 |
| Shore-A-Härte | 66 | 65 |
| Ball Rebound | 40,6 | 40,1 |

Das Eigenschaftsbild des Full-Compounds macht deutlich, daß Chemikalien, die ansonsten in einem energieaufwendigen Mischprozeß in das Polymer eingearbeitet werden müssen, ohne Verlust an Wirksamkeit, während der Produktion des Produktes hinzugefügt werden können. Man erhält hierdurch extrudierbare Fertigmischungen, ohne ein herkömmliches Mischaggregat (z.B. Innenmischer, Walze) einsetzen zu müssen.

### Beispiel C Vergleich des gummitechnischen Wertebildes eines kieselsäuregefüllten Halb-Compounds (H-EPB III) gegen eine konventionell hergestellte Standardmischung

### a) Rezeptur

| Mischung | 1 [phr] | 2 [phr] |
|---|---|---|
| E - SBR 1500 | 100 | - |
| Ultrasil 7000 Gr. | 75 | - |
| H-EPB III | - | 213,6* |
| Si 69 | 6,1 | - |
| Enerthene 1849-1 | 25 | - |
| ZnO RS | 3 | - |
| Stearinsäure | 2 | - |
| 6 PPD | 1,5 | - |
| Protector G 35 | 1 | - |
| CBS | 1,5 | 1,5 |
| DPG | 2 | 2 |
| Schwefel | 1,5 | 1,5 |

| | | |
|---|---|---|
| * Alle Ingredienzen des Grundcompounds sind im Pulverkautschuk während dessen Herstellung beigefügt worden. | | |

### b)Mischverfahren

### 1. Stufe

| | | | | | |
|---|---|---|---|---|---|
| Innenmischer : | GK 1,5 E; Volumen 1,5 L; Friktion 1:1; Stempel 5,5 bar | | | | |
| Mischung | | 1 | | | 2 |
| Füllgrad | | 0,55 | | | 0,6 |
| RPM | | 50 | | | 40 |
| Durchflußtemperatur [°C] | | 60 | | | 60 |
| 0 - 0,5' | E-SBR 1500 | | 0 - 1' | H-EPB III | |
| 0,5 - 1' | ½ Ultrasil 7000 Gr, ½ Si 69, Öl, ZnO, Stearinsäure, Wachs | | 1 - 2,5' | Mischen und ausstoßen | |
| 1 - 2' | ½ Ultrasil 7000 Gr, | | | | |
| | ½ Si 69, 6 PPD | | | | |
| 2' | Säubern | | | | |
| 2 - 4' | Mischen und ausstoßen | | Ausstoßtemperatur ∼ 135°C | | |
| Ausstoßtemperatur ∼ 135°C | | | | | |

### 2. Stufe

| | |
|---|---|
| Innenmischer : | GK 1,5 E; Volumen 1,5 L; Friktion 1:1; Stempel 5,5 bar; RPM 30; Füllgrad 0,55; Durchflußtemperatur 60°C |
| Beide Mischungen | |
| 0 - 1,5' | Batch Stufe 1, Beschleuniger, Schwefel |
| 1,5' | Ausstoßen |

### c) Vulkanisatdaten

Vulkanisationstemperatur : 165°C
Vulkanisationszeit : 15 min

| Mischungsnummer | 1 | 2 |
|---|---|---|
| Zugfestigkeit [MPa] | 17,7 | 19,2 |
| Modul 100% [MPa] | 1,5 | 1,5 |
| Modul 300% [MPa] | 9,8 | 9,4 |
| Bruchdehnung [%] | 420 | 520 |
| Bruchenergie [J] | 99 | 146 |
| Shore-A-Härte | 73 | 75 |

Auch bei kieselsäuregefüllten Mischungen gelingt es ohne Verlust an Wirksamkeit weitere Mischungsbestandteile im Pulverkautschukprozeß beizufügen.

### Beispiel D Vergleich des gummitechnischen Wertebildes eines kieselsäuregefüllten Full-Compounds ( F-EPB IV ) gegen eine konventionell hergestellte Standardmischungen

### a) Rezeptur

| Mischung | 1 [phr] | 2 [phr] |
|---|---|---|
| E - SBR 1500 | 100 | - |
| Ultrasil 7000 Gr. | 75 | - |
| F-EPB IV | - | 219 |
| F-EPB V | - | - |
| Si 69 | 6,1 | - |
| Si 75 | - | |
| Enerthene 1849-1 | 25 | - |
| ZnO RS | 3 | - |
| Stearinsäure | 2 | - |
| 6 PPD | 1,5 | - |
| Protector G 35 | 1 | - |
| CBS | 1,5 | - |
| DPG | 2 | - |
| Schwefel | 1,5 | - |

### b) Mischverfahren

### 1. Stufe

| | | | | | |
|---|---|---|---|---|---|
| Innenmischer : | GK 1,5 E; Volumen 1,5 L; Friktion 1:1; Stempel 5,5 bar | | | | |
| Mischung | | 1 | | | 2 |
| Füllgrad | | 0,55 | | | 0,6 |
| RPM | | 50 | | | 40 |
| Durchflußtemperatur [°C] | | 60 | | | 60 |
| 0 - 0,5' | SBR 1500 | | 0 - 1' | F-EPB IV | |
| 0,5 - 1' | ½ Ultrasil 7000, | | 1 - 2,5' | Mischen und ausstoßen | |
| | ½ Si 69, Öl, ZnO, | | | | |
| | Stearinsäure, Wachs | | | | |
| 1 - 2' | ½ Ultrasil 7000, | | | | |
| | ½ Si 69, 6 PPD | | | | |
| 2' | Säubern | | | | |
| 2 - 4' | Mischen und ausstoßen | | Ausstoßtemperatur ∼ 135°C | | |
| Ausstoßtemperatur ∼ 135°C | | | | | |

### 2. Stufe

| | |
|---|---|
| Innenmischer : | GK 1,5 E; Volumen 1,5 L; Friktion 1:1; Stempel 5,5 bar; RPM 30; Füllgrad 0,53; Durchflußtemperatur 60°C |
| Beide Mischungen | |
| 0 - 1,5' | Batch Stufe 1, Beschleuniger, Schwefel |
| 1,5' | Ausstoßen |

### c) Vulkanisatdaten

Vulkanisationstemperatur : 165°C
Vulkanisationszeit : 15 min

| Mischungsnummer | 1 | 2 |
|---|---|---|
| Zugfestigkeit [MPa] | 17,7 | 18,8 |
| Modul 100% [MPa] | 1,5 | 1,5 |
| Modul 300% [MPa] | 9,8 | 10,0 |
| Bruchdehnung [%] | 420 | 490 |
| Bruchenergie [J] | 99 | 131 |
| Shore-A-Härte | 73 | 73 |

Die Herstellung eines weißen, kieselsäuregefüllten Full-Compounds ist ohne Einbußen an gummitechnischer Leistung im Pulverkautschukherstellprozeß möglich.

### Beispiel E Vergleich der Daten eines Full-Compounds auf Basis NR/SBR gegen eine konventionell hergestellte Standardmischung

### a) Rezeptur

| Mischung | 1 [phr] | 2 [phr] |
|---|---|---|
| RSS 1 ML = 70-80 | 50 | |
| SBR 1500 | 50 | - |
| F-EPB V | - | 176* |
| N 234 | 50 | - |
| Enerthene 1849-1 | 12 | - |
| ZnO RS | 3 | - |
| Stearinsäure | 2 | - |
| 6 PPD | 1,5 | - |
| TMQ | 1 | - |
| Protector G 35 | 1 | - |
| TBBS | 1,2 | - |
| MBTS | 0,3 | - |
| Schwefel | 2 | - |

| | | |
|---|---|---|
| * Der Full-Compound enthält alle Bestandteile aus Mischung 1. | | |

### b) Mischverfahren

### 1. Stufe

| | | | | |
|---|---|---|---|---|
| Innenmischer : | GK 1,5 E; Volumen 1,5 L; Friktion 1:1; Stempel 5,5 bar | | | |
| Mischung | | 1 | | 2 |
| Füllgrad | | 0,55 | | |
| RPM | | 50 | | |
| Durchflußtemperatur [°C] | | 60 | | |
| 0 - 0,5' | RSS 1,SBR 1500 | | Stufe entfällt | |
| 0, 5 - 1,5' | Ruß, Öl, ZnO, Stearinsäure,6 PPD, TMQ, Wachs | | | |
| 1,5' | Säubern | | | |
| 1,5 - 3' | Mischen und ausstoßen | | | |
| Ausstoßtemperatur ∼ 135°C | | | | |

### 2. Stufe

| | | | |
|---|---|---|---|
| Innenmischer : | GK 1,5 E; Volumen 1,5 L; Friktion 1:1; Stempel 5,5 bar; RPM 30; Füllgrad 0,55; Durchflußtemperatur 60°C | | |
| 0 - 1,5' | Batch Stufe 1, Beschleuniger, | 0 - 0,5' | F-EPB V als Pulver, |
| 1,5' | Schwefel Ausstoßen | Beschleuniger, Schwefel | |
| | | 0,5 - 1,5' | Mischen und |
| | | Ausstoßen | |

### c) Vulkanisatdaten

Vulkanisationstemperatur : 155°C
Vulkanisationszeit : 20 min

| Mischungsnummer | 1 | 2 |
|---|---|---|
| Dₘₐₓ-Dₘᵢₙ | 14,4 | 15,3 |
| Zugfestigkeit [MPa] | 18,2 | 18,5 |
| Modul 300% [MPa] | 9,4 | 9,3 |
| Bruchdehnung [%] | 460 | 460 |
| Bruchenergie [J] | 107 | 104 |
| Shore-A-Härte | 63 | 64 |

Das Eigenschaftsbild des Fullcompounds macht deutlich,daß alle Chemikalien der Das Eigenschaftsbild des Fullcompounds Standardmischung 1 bereits im Pulverkautschukprozeß dem Produkt beigefügt werden können. Es ist keine Einbuße im gummitechnischen Wertebild zu beobachten.

## Patentansprüche

1. Verfahren zur Herstellung eines feinteiligen Kautschukpulvers, das
a) eine Kautschukmatrix und zusätzlich einen oder mehrere silikatische Füllstoffe und/oder Ruße, die gegebenenfalls mit einer oder mehreren Organosiliciumverbindungen der allgemeinen Formeln (I), (II) oder (III) modifiziert sind,
[R¹ₙ-(RO)₃₋ₙSi-(Alk)ₘ-(Ar)ₚ]_{q}[B] (I),
oder
R¹ₙ(RO)₃₋ₙSi-(Alkenyl) (II)
in denen bedeuten
B: -SCN, -SH, -Cl, -NH₂ (wenn q = 1) oder -Sₓ- (wenn q = 2)
R und R¹ : eine Alkylgruppe mit 1 bis 4 Kohlenstoffatomen,verzweigt oder nicht verzweigt, den Phenylrest,wobei alle Reste R und R¹ jeweils die gleiche oder eine verschiedene Bedeutung haben können, bevorzugt eine Alkylgruppe,
n: 0; 1 oder 2,
Alk: einen zweiwertigen geraden oder verzweigten Kohlenwasserstoffrest mit 1 bis 6 Kohlenstoffatomen,
m : 0 oder 1
Ar: einen Arylenrest mit 6 bis 12 C-Atomen
p: 0 oder 1 mit der Maßgabe, dass p und n nicht gleichzeitig 0 bedeuten,
x: eine Zahl von 2 bis 8,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen,
wobei die o.g. Füllstoffe oder modifizierten Füllstoffe im Partikelinneren und einen mit diesem verbundenen äußeren Bereich verteilt sind,
b) einen oder mehrere der zur Herstellung von Kautschukvulkanisaten bekannten Zusätze:
a) Zinkoxid und/oder Zinkstearat,
b) Stearinsäure,
c) Polyalkohole,
d) Polyamine,
e) Harze, Wachse, Welchmacheröle,
f) Alterungsschutzmittel
g) gegebenenfalls Flammschutzmittel,
h) gegebenenfalls Vulkanisationsbeschleuniger,
i) gegebenenfalls Schwefel, insbesondere mit einer oberflächen-aktiven Substanz modifiziert,
enthält, mit einem Korngrößenbereich der Kautschukpulver von 0,05 bis 10 mm und einem komgrößenunabhängigen Füllstoffanteil
durch Ausfällen aus wasserhaltigen Mischungen, die gegebenenfalls mit Organosiliciumverbindungen modifizierten, feinteilige(n) Füllstoff(e) (Ruß und/oder silikatischer Füllstoff), wasserlösliche Salze eines Metalls der Gruppen IIa, IIb, IIIa und VIII des periodischen Systems der Elemente und einen Kautschuklatex oder die wässrige Emuslion einer Kautschuklösung, gegebenenfalls in Gegenwart eines organischen Lösungsmittels enthalten, wobei man
a) ≥ 50 Gew.-% aber weniger als 100 Gew.-% des feinteiligen Füllstoffs, in Form einer wässrigen Suspension mit einem Gehalt von 2 bis 15 Gew.-% in Wasser, gegebenenfalls mit einer der für die Modifizierung der Füllstoffoberfläche vorgesehenen Menge von 0,1 bis 20 Gew%, bezogen auf den Füllstoff, einer oder mehrerer der Organosiliciumverbindung und/oder ≥ 50 Gew.-% aber weniger als 100 Gew.-% eines zumindest zum Teil mit einer oder mehreren der Organosiliciumverbindungen an der Oberfläche modifizierten Füllstoffs in Gegenwart eines Emulgators mit einem Kautschuklatex oder einer wässrigen Emulsion einer Kautschuklösung vermischt und den pH-Wert der Mischung auf einen Wert im Bereich von 7,5 bis 6,5, durch Zusatz einer Lewis-Säure, absenkt (erste Stufe).
b) den restlichen Anteil (Splitting Anteil) der oben genannten feinteiligen Füllstoffe, gegebenenfalls mit der zur Modifizierung der Füllstoffoberfläche vorgesehenen Restmenge an Organosiliciumverbindungen, in Form einer Suspension zusetzt, den pH-Wert auf einen Wert im Bereich < 6,5 bis ∼ 5 absenkt, so dass der in der Mischung befindliche Kautschuk zusammen mit dem Füllstoff vollständig ausfällt (zweite Stufe),
c) den ausgefällten Feststoff mit an sich bekannten Maßnahmen abtrennt,
d) ihn gegebenenfalls wäscht und
e) trocknet.

2. Verfahren gemäß Anspruch 1,
**dadurch gekennzeichnet,**
**dass** die Feststoffe in dem Kautschukpulver in einer Korngröße ≤ 50 µm vorliegen.

3. Verfahren gemäß Anspruch 1,
**dadurch gekennzeichnet**
**dass** man bei einem Gesamtanteil von ≥ 80 Teilen Füllstoff phr 1 bis 10 Teile dieser Menge als restlichen Anteil in der zweiten Stufe zusetzt.

4. Verfahren gemäß einem oder mehreren der vorhergehenden Ansprüche,
**dadurch gekennzeichnet,**
**dass** man einen Ruß mit einer mittleren Teilchengröße von 1 bis 9 µm einsetzt.

5. Verfahren gemäß einem oder mehreren der vorhergehenden Ansprüche,
**dadurch gekennzeichnet,**
**dass** man den silikatischen Füllstoff in Form von gefällter Kieselsäure zumindest zum Teil in Form eines salzfrei gewaschenen Filterkuchens einsetzt.

6. Verfahren gemäß einem oder mehreren der vorhergehenden Ansprüche,
**dadurch gekennzeichnet,**
**dass** man vor der Ausfällung der Kautschukpulver der Suspension/Emulsion weitere der üblichen Verarbeitungs- und/oder Vulkanisationshilfsmittel,a) bis i), wie sie in Anspruch 1 genannt werden, zusetzt, mit der Maßgabe, dass die Teilchengröße der zugesetzten festen Bestandteile < 50 µm beträgt.

7. Verfahren gemäß Anspruch 6,
**dadurch gekennzeichnet,**
**dass** man die eines oder mehrere der genannten Verarbeitungs- und/oder Vulkanisationshilfsmittel enthaltende Füllstoffsuspension vor dem Zusatz der Kautschukkomponente durch ein Mahlwerk schickt.

8. Verfahren gemäß Anspruch 7,
**dadurch gekennzeichnet,**
**dass** man Zinkoxid mit einer Oberfläche zwischen 20 und 50 m²/g mit der Füllstoffsuspension vormischt und in der ersten Stufe zusetzt.

9. Verfahren gemäß einem oder mehreren der vorhergehenden Ansprüche,
**dadurch gekennzeichnet,**
**dass** man einen oder mehrere der Bestandteile a) bis i) aus Anspruch 1 mit der Latexemulsion bzw. Kautschuklösung oder der Füllstoffsuspension vormischt und dann in der ersten Stufe, die so hergestellte Latexemulsion bzw. Kautschuklösung mit der so hergestellten Füllstoffsuspension vermischt.

10. Verfahren gemäß einem oder mehreren der vorhergehenden Ansprüche,
**dadurch gekennzeichnet,**
**dass** man die (den) Vulkanisationsbeschleuniger mit dem die oben genannten Zusätze (a bis g) enthaltenden Kautschukpulver vermischt oder in einem mit dem Kautschuk verträglichen Öl suspendiert oder gelöst auf das Kautschukpulver aufsprüht.

11. Verfahren gemäß Anspruch 10,
**dadurch gekennzeichnet,**
**dass** man mit dem Vulkanisationsbeschleuniger zusätzlich Schwefel einsetzt.

## Claims

1. A process for producing a finely divided rubber powder which contains
a) a rubber matrix and additionally one or more siliceous fillers and/or carbon blacks, modified, if desired, with one or more organosilicon compounds of the general formula (I), (II) or (III)
[R¹ₙ-(RO)₃₋ₙSi-(alk)ₘ-(Ar)ₚ]_{q}[B] (I),
or
R¹ₙ(RO)₃₋ₙSi-(alkenyl) (II)
in which
B is -SCN, -SH, -Cl, -NH₂ (if q = 1) or-Sₓ- (if q = 2),
R and R¹ are each an alkyl group having from 1 to 4 carbon atoms that is branched or unbranched or are the phenyl radical, it being possible for all radicals R and R¹ to have in each case the same or a different definition, preferably an alkyl group,
n is 0, 1 or 2,
alk is a divalent linear or branched hydrocarbon radical having from 1 to 6 carbon atoms,
m is 0 or 1,
Ar is an arylene radical having from 6 to 12 carbon atoms,
p is 0 or 1, with the proviso that p and n are not simultaneously 0,
x is a number from 2 to 8,
alkenyl is a monovalent, linear or branched unsaturated hydrocarbon radical having from 2 to 20 carbon atoms, preferably from 2 to 8 carbon atoms,
the aforementioned fillers or modified fillers being distributed in the interior of the particle and an outer zone connected to this interior,
b) one or more of the following additives known for the production of rubber vulcanizates:
a) zinc oxide and/or zinc stearate,
b) stearic acid,
c) polyalcohols,
d) polyamines,
e) resins, waxes, plasticizer oils,
f) ageing inhibitors,
g) if desired, flame retardants,
h) if desired, vulcanization accelerators,
i) if desired, sulphur, in particular modified with a surface-active substance,
having a rubber powder particle size range from 0.05 to 10 mm and a particle size-independent filler fraction,
by precipitation from a mixture which contains water and which contains finely divided filler(s) (carbon black and/or siliceous filler) modified, if desired, with organosilicon compounds, or which contains watersoluble salts of a metal of groups IIa, IIb, IIIa or VIII of the Periodic Table of the Elements and a rubber latex, or which contains the aqueous emulsion of a rubber solution, in the presence, if desired, of an organic solvent,
a) ≥ 50% by weight but less than 100% by weight of the finely divided filler, in the form of an aqueous suspension with a filler content from 2% to 15% by weight in water, having, if desired, an amount, intended for the modification of the filler surface, of from 0.1% to 20% by weight, based on the filler, of one or more of the organosilicon compounds, and/or ≥ 50% by weight but less than 100% by weight of a filler at least partly surface-modified with one or more of the organosilicon compounds, being mixed in the presence of an emulsifier with a rubber latex or with an aqueous emulsion of a rubber solution, and the pH of the mixture being lowered to a level in the range from 7.5 to 6.5, by addition of a Lewis acid (first stage),
b) the remaining fraction (splitting fraction) of the abovementioned finely divided filler, if appropriate with the residual amount of organosilicon compounds intended for modification of the filler surface, being added in the form of a suspension, the pH being lowered to a level in the range from < 6.5 to ∼ 5, so that the rubber present in the mixture precipitates fully together with the filler (second stage),
c) the precipitated solid being separated off by conventional measures,
d) being washed if desired, and
e) being dried.

2. A process according to claim 1, **characterized in that** the solids in the rubber powder are present in a particle size ≤ 50 µm.

3. A process according to claim 1, **characterized in that** in the case of a total fraction of ≥ 80 parts of filler phr from 1 to 10 parts of this amount are added as a residual fraction in the second stage.

4. A process according to one or more of the preceding claims, **characterized in that** a carbon black having an average particle size from 1 to 9 µm is used.

5. A process according to one or more of the preceding claims, **characterized in that** the siliceous filler is used in the form of precipitated silica at least partly in the form of a filter cake which has been washed until salt-free.

6. A process according to one or more of the preceding claims, **characterized in that** precipitation of the rubber powder is preceded by the addition to the suspension/emulsion of further of the typical processing auxiliaries and/or vulcanization auxiliaries, a) to i), as specified in claim 1, with the proviso that the particle size of the added solid ingredients is < 50 µm.

7. A process according to claim 6, **characterized in that** the filler suspension containing one or more of the specified processing auxiliaries and/or vulcanization auxiliaries is passed through a grinder before the addition of the rubber component.

8. A process according to claim 7, **characterized in that** zinc oxide having a surface area of from 20 to 50 m²/g is premixed with the filler suspension and added in the first stage.

9. A process according to one or more of the preceding claims, **characterized in that** one or more of the ingredients a) to i) from claim 1 are premixed with the latex emulsion or rubber solution or with the filler suspension and then in the first stage the latex emulsion or rubber solution thus produced is mixed with the filler suspension thus produced.

10. A process according to one or more of the preceding claims, **characterized in that** the vulcanization accelerator or accelerators is or are mixed with the rubber powder containing the additives specified above (a to g) or is or are applied to the rubber powder by spraying in the form of a solution or suspension in an oil which is compatible with the rubber.

11. A process according to claim 10, **characterized in that** sulphur is used additionally with the vulcanization accelerator.

## Revendications

1. Procédé de fabrication d'une poudre de caoutchouc finement texturée qui contient
a) une matrice en caoutchouc et, en plus,
une ou plusieurs charges silicatiques et/ ou noirs de carbone qui sont modifié(e)s par un ou plusieurs composés organosiliciés de formules générales (I), (II) ou (III),
[(RO¹ₐ-(RO)₃₋ₚSi-(Alk)ₘ-(Ar)ₚ]_{q}[B] (I),
ou
R¹ₙ(RO)₃₋ₙSi-(Alkenyl) (II)
avec
B : -SCN, -SH, -Cl, -NH₂ (si q = 1) ou -Sx- (si q = 2)
R et R¹ : un groupe alkyle comportant 1 à 4 atomes de carbone, ramifié ou non ramifié, un radical phényle, tous les radicaux R et R¹ ayant chacun la même signification ou une signification différente, de préférence un groupe alkyle,
n : 0; 1 ou 2,
Alk : un radical hydrocarbure bivalent linéaire ou ramifié comportant 1 à 6 atomes de carbone,
m : 0 ou 1,
Ar : un radical arylène comportant 6 à 12 atomes de C,
p : 0 ou 1, étant indiqué que p et n ne signifient pas en même temps 0,
x : un nombre de 2 à 8,
Alcényle : un radical hydrocarbure monovalent saturé linéaire ou ramifié, comportant 2 à 20 atomes de carbone, de préférence 2 à 8 atomes de carbone,
les charges ou charges modifiées indiquées ci-dessus étant réparties à l'intérieur des particules et dans une zone extérieure reliée à celui-ci,
b) ou plusieurs des additifs connus pour la fabrication de vulcanisats de caoutchouc :
a) oxyde de zinc et/ ou stéarate de zinc,
b) acide stéarique,
c) polyalcools,
d) polyamines
e) résines, cires, huiles plastifiantes,
f) agents anti-vieillissement,
g) le cas échéant agents ignifuges,
h) le cas échéant accélérateurs de la vulcanisation,
i) le cas échéant, soufre, en particulier modifié avec une substance tensioactive,
avec une plage granulométrique de la poudre de caoutchouc de 0,05 à 10 mm et une fraction de charge indépendante du domaine granulométrique,
par précipitation à partir de mélanges aqueux qui contiennent, le cas échéant, une (des) charges(s) (noir de carbone et/ou charge silicatique) finement texturé(e)s modifiée(s) par des composés organosiliciés, des sels hydrosolubles d'un métal des groupes IIa, IIb, IIIa et VIII de la classification périodique des éléments et un latex de caoutchouc ou l'émulsion aqueuse d'une solution de caoutchouc en présence d'un solvant organique, selon lequel
a) on mélange ≥ 50 % en poids mais moins de 100 % en poids de la charge finement texturée, sous la forme d'une suspension aqueuse contenant de 2 à 15 % en poids d'eau, le cas échéant, avec une quantité, prévue pour la modification de la surface de la charge, de 0,1 à 20 % en poids par rapport à la charge, d'un ou plusieurs des composés organosiliciés et/ou ≥ 50 % en poids mais moins de 100 % en poids d'une charge modifiée en surface au moins en partie par un ou plusieurs des composés organosiliciés en présence d'un émulsifiant avec un latex de caoutchouc ou d'une émulsion aqueuse d'une solution de caoutchouc, et on abaisse le pH du mélange à une valeur de l'ordre de 7,5 à 6,5 en ajoutant un acide de Lewis (première étape),
b) on ajoute la fraction restante (fraction séparée) des charges finement texturées indiquées ci-dessus, le cas échéant à la quantité restante, prévue pour modifier la surface des charges, de composés organosiliciés, sous la forme d'une suspension, on abaisse le pH à une valeur de l'ordre de moins de 6,5 à ≈ 5, de manière à ce que le caoutchouc se trouvant dans le mélange soit entièrement précipité avec la charge (deuxième étape),
c) on sépare la matière solide précipitée avec des mesures connues en soi,
d) on la lave le cas échéant et
e) on la sèche.

2. Procédé selon la revendication 1,
**caractérisé en ce que**
les matières solides se présentent, dans la poudre de caoutchouc, avec une granulométrie ≤ 50 µm.

3. Procédé selon la revendication 1,
**caractérisé en ce qu'**
on ajoute, à une fraction totale de ≥ 80 parties de charge phr, 1 à 10 parties de cette quantité en tant que fraction restante à la deuxième étape.

4. Procédé selon l'une quelconque ou plusieurs des revendications précédentes,
**caractérisé en ce qu'**
on utilise un noir de carbone d'une granulométrie moyenne de 1 à 9 µm.

5. Procédé selon l'une quelconque ou plusieurs des revendications précédentes,
**caractérisé en ce qu'**
on utilise la charge silicatique sous forme d'acide silicique précipité, du moins en partie sous la forme d'un gâteau de filtration lavé sans sel.

6. Procédé selon l'une quelconque ou plusieurs des revendications précédentes,
**caractérisé en ce qu'**
avant la précipitation des poudres de caoutchouc de la suspension/émulsion, on ajoute d'autres auxiliaires de mise en oeuvre et/ou de vulcanisation usuels, a) à i) tels qu'indiqués dans la revendication 1, étant indiqué que la granulométrie des constituants solides ajoutés est inférieure à 50 µm.

7. Procédé selon la revendication 6,
**caractérisé en ce qu'**
on place la suspension de charge contenant un ou plusieurs des auxiliaires de mise en oeuvre et/ou de vulcanisation indiqués dans un broyeur avant d'ajouter les composants du caoutchouc.

8. Procédé selon la revendication 7,
**caractérisé en ce qu'**
on mélange au préalable de l'oxyde de zinc, ayant une surface comprise entre 20 et 50 m²/g avec la suspension de charge et on l'ajoute lors de la première étape.

9. Procédé selon l'une quelconque ou plusieurs des revendications précédentes,
**caractérisé en ce qu'**
on mélange au préalable un ou plusieurs des constituants a) à i) de la revendication 1 à l'émulsion de latex respectivement à la solution de caoutchouc ou à la suspension de charge et on mélange ensuite, lors de la première étape, l'émulsion de latex respectivement la solution de caoutchouc ainsi préparée avec la suspension de charge ainsi préparée.

10. Procédé selon l'une quelconque ou plusieurs des revendications précédentes,
**caractérisé en ce qu'**
on mélange le(s) accélérateur(s) de la vulcanisation avec la poudre de caoutchouc contenant les additifs a) à g) indiqués ci-dessus ou bien on le(s) met en suspension dans une huile compatible avec le caoutchouc ou on le(s) pulvérise, dissous, sur la poudre de caoutchouc.

11. Procédé selon la revendication 10,
**caractérisé en ce qu'**
on utilise en plus du soufre avec l'accélérateur de vulcanisation.
